# EUROPEAN PATENT APPLICATION

(11) **EP 0 826 573 A2**
(43) Date of publication of application: **04.03.1998**
(21) Application number: 97306202.9
(22) Date of filing: 15.08.1997
(51) Int. Cl.: B62B 5/08, B62B 3/14

(54) **Shopping trolley with seating for a child or baby**

(30) Priority: 27.08.1996 GB 9617849
(71) Applicant: CLARES MERCHANDISE HANDLING EQUIPMENT LIMITED, Wells, Somerset BA5 1UT (GB)
(72) Inventor: Basharat, Abdul Majid, Wells, Somerset BS16 3EP (GB)
(74) Representative: Brown, Kenneth Richard

(57) **Abstract**

A shopping trolley (10) having seat means for at least one child or baby, said seat means comprising frame means (50, 52) mounted to a rear end gate (14) of the trolley and back support means (42) and bottom support means (44) carried by said frame means, the arrangement being such that when, in use, the trolley is moved into a nested position with a similar such trolley, said seat means can move from a child or baby receiving position to a collapsed position in which said frame means, back support means and bottom support means are disposed adjacent said rear end gate of the trolley.

## Description

The invention relates to shopping trolleys and more particularly to providing such trolleys with a seating suitable for a child or baby.

It is known to provide a shopping trolley with a rudimentary seat for a child such as the seat 42 shown in Figure 1 of US 3351380. Such seats which have been widely used for many years are pivotable from a stored position in which the seat is folded up so as to be substantially flush with an end gate of the trolley basket and a child receiving position in which it protrudes into the basket. The end gate may be provided with apertures through which the child's legs may extend. Such seats are not generally well suited to the transport of babies and are not particularly comfortable for a child.

United Kingdom Patent No. 2275895 discloses a shopping trolley provided with a more comfortable seat suitable for babies or a child. A seat of monocoque construction is pivotally mounted to the trolley so as to be pivotable between two child receiving positions. The seat is pivotally mounted at its front edge to a member which extends across the rear of the trolley adjacent the push-handle. A pivotable support member is provided on the back of the child seat. The child seat can be supported against a fixed divider provided in the goods receiving basket either by direct engagement of the back of the seat with the divider or by use of the support member defining two child receiving positions. A disadvantage of this arrangement is that the trolley is not nestable. Furthermore, it is necessary to provide a fixed divider in the goods receiving basket which may not always be desirable.

It is an object of the invention to at least partially overcome the above-described problems.

Accordingly, the invention provides a shopping trolley having seat means for at least one child or baby, said seat means comprising frame means mounted to a rear end gate of the trolley and back support means and bottom support means carried by said frame means, the arrangement being such that when, in use, the trolley is moved into a nested position with a similar such trolley, said seat means can move from a child or baby receiving position to a collapsed position in which said frame means, back support means and bottom support means are disposed adjacent said rear end gate.

The invention includes a shopping trolley having a goods receiving receptacle which is provided with a gate at a rear end thereof and seating for at least one child or baby, said seating comprising: frame means mounted to said gate; bottom support means defining at least one recess for receiving the bottom of a child or baby; and back support means for supporting the back of a child or baby seated in said bottom support means; said bottom support means and back support means being carried by said frame means and, to permit the trolley to receive a similar such trolley in a nested condition, said seating being adapted to be moveable from a child or baby receiving condition to a collapsed condition in which said frame means, bottom support means and back support means are disposed adjacent said end gate.

The invention includes a shopping trolley having a goods receiving receptacle which has a rear end gate and seating for at least one child or baby, said seating comprising: a first frame comprising at least one rod-like member and pivotably mounted to said rear end gate; a second frame comprising at least one rod-like member and pivotably mounted to said rear end gate; a contoured back support fixed to said first frame; and a contoured bottom support fixed to said second frame; said back support and bottom support defining at least one seat for a child or baby and said first frame and second frame being arranged such that, in use, said seating can be collapsed to a position adjacent said rear end gate to permit nesting of the trolley with similar such trolleys.

In order that the invention may be well understood an embodiment thereof, which is given by way of example only, will now be described with reference to the drawings, in which:
Figure 1 is a perspective view of a shopping trolley provided with a seat for a child or baby;
Figure 2 is a partial perspective view of the shopping trolley of Figure 1 showing the seat in a collapsed position; and
Figure 3 is a schematic representation of structural members of the seat with the seat in a child or baby receiving position.

A shopping trolley 10 comprises a chassis and a goods receiving basket 12 mounted on the chassis. The basket 12 is provided with a rear end gate 14 which is pivotable in a forwards and upwards direction of the trolley 10 from the closed position shown in the drawings.

The chassis comprises two generally L-shaped side members 16 which are disposed in spaced apart relationship and extend in the lengthwise direction of the trolley 10. The side members 16 are interconnected by two transversely extending cross-members 18, 20. The basket 12 is fixed by means of welding between the rearward upright positions of the side members 16 and is seated on the cross-member 20.

Each side member 16 has a castor 22 fixed to its leading end and a push-handle support 24 fitted to its opposite, rearward, end. A push-handle 28 is disposed between the push-handle supports 24. A respective leg 30 projects from each side member 16 and has a castor 32 fixed to the end thereof disposed remote from the side member.

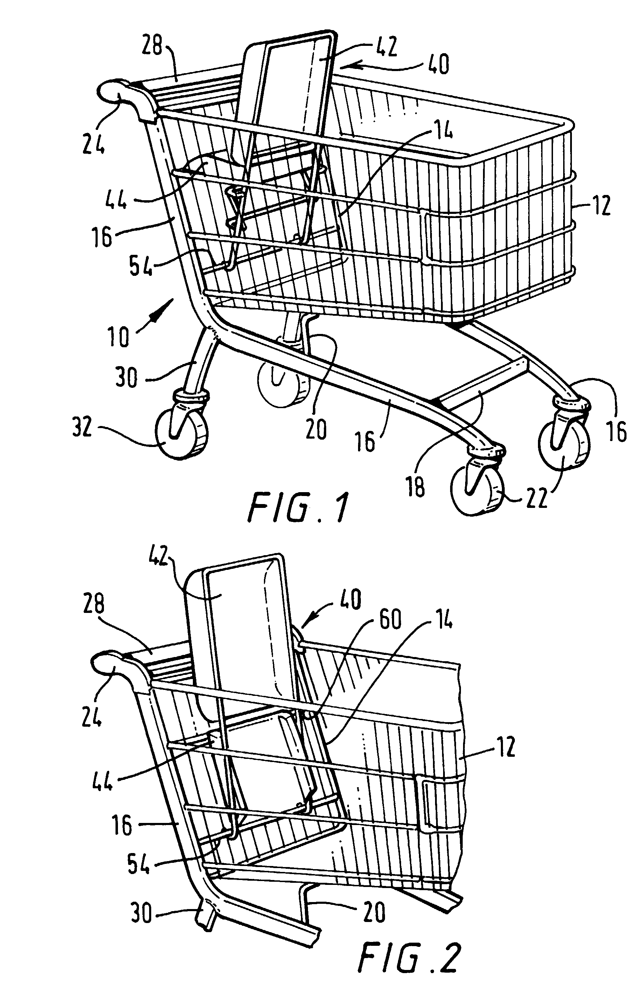

The trolley 10 is provided with a seat 40 which is suitable for receiving a child or baby. The seat 40 is disposed in the basket 12 in the region of the rear end gate 14 and is moveable between a child or baby receiving position (shown in Figure 1) and a collapsed position (shown in Figure 2) to allow the trolley to be nested with similar such trolleys.

The seat 40 comprises a contoured back support portion 42 and a contoured bottom support portion 44 carried by a frame means which is connected to the rear end gate 14.

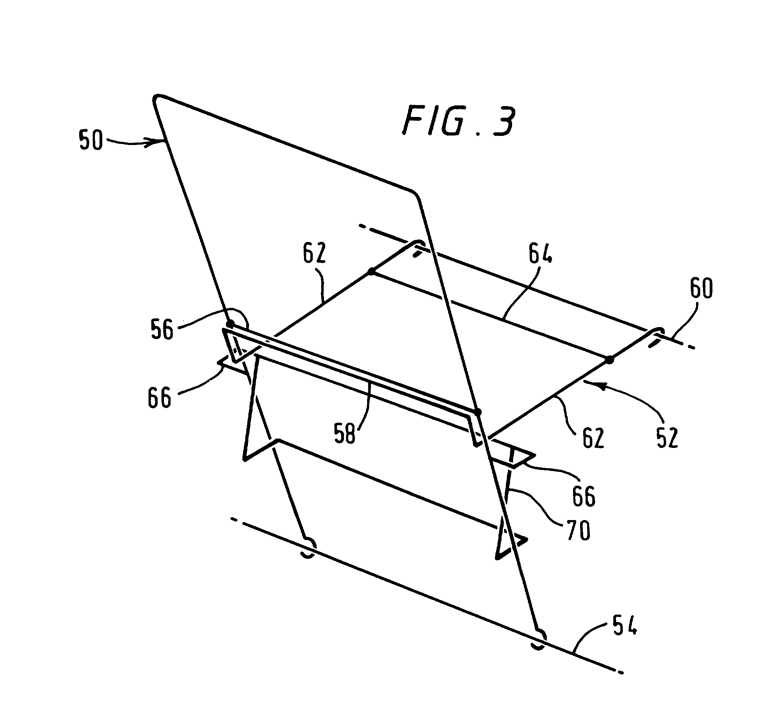

Referring particularly to Figure 3, the frame means comprises a first frame 50 which carries the back support portion 42 and a second frame 52 which carries the bottom support portion 44.

The first frame 50 comprises a generally U-shaped member which is pivotably connected at its free ends to a cross-rail 54 of the rear end gate 14. The opposite side portions of the frame 50 are interconnected by a cross-rail 56. The cross-rail 56 is arranged to engage a central portion 58 of the second frame 52 when the seat is in the child or baby receiving position.

The second frame 52 comprises an elongate member which is bent so as to be generally U-shaped in plan and has it free ends pivotably connected with a cross-rail 60 of the rear end gate 14. The cross-rail 54 to which the first frame 50 is connected is disposed below the cross-rail 60 to which the second frame 52 is connected.

The transversely extending central portion 58 of the second frame 52 is bent out of the plane of the opposed side portions, or legs, 62 of the frame such that in side elevation the frame is generally L-shaped. The legs 62 of the second frame 52 may be interconnected by one or more stiffening members such as the rail 64 shown in Figure 3.

The second frame 52 is sized such that it can pass between the opposed side portions of the first frame 50 during movement of the seat 40 between the child or baby receiving position and the collapsed position.

The first frame 50 has a generally C-shaped member 66 fitted thereto. The C-shaped member 66 extends between the opposite side portions of the first frame 50 and is arranged such that in the child or baby receiving position of the seat 40 it provides a support for the second frame 52.

A stop member 70 depends from the C-shaped member 66. The stop member is bent to define two generally upright portions which are disposed in parallel spaced apart relationship and are interconnected by a central portion which extends at an angle to the plane of the upright portions. The free ends of the upright portions of the stop member 70 are joined by means of welding to the C-shaped member 66.

The back and bottom support portions 42, 44 are plastics mouldings which each have a generally U-shaped transverse cross-section. The mouldings are fixed to their respective frames 50, 52 by any suitable means which will be readily apparent to those skilled in the art and will not therefore be described in any detail herein.

As will be apparent from Figure 1, the U-shaped cross-sections of the back and bottom support portions 42, 44 define respective recesses such that a degree of lateral restraint is provided for a child or baby seated in the seat 40.

In use, if the seat 40 is in the collapsed position shown in Figure 2 and it is wished to transport a child or baby in the trolley 10, the seat can readily be moved to the child or baby receiving position shown in Figure 1. The user of the trolley 10 simply has to move the back support portion 42 away from the push-handle 28 towards the leading end of the trolley. This can be achieved by standing adjacent the push-handle 28 and simply pushing on the back support portion 42. This causes the first frame 50 to pivot away from the rear end gate 14. As the frame 50 moves away from the end gate 14 the C-shaped member 66 is brought into contact with the underside of the legs 62 of the second frame 52 so that the frame 52 is gradually pivoted upwardly and away from the end gate towards the position shown in Figures 1 and 3.

The child or baby receiving position of the seat 40 is defined when due to the pivoting movement of the first and second frames 50, 52 the cross-rail 56 engages the central portion 58 of the second frame 52. It will be appreciated that in the child or baby receiving position of the seat 40, further pivotal movement of the first frame away from the end gate is prevented by engagement between the second frame central portion 58 and the cross-rail 56 and the second frame is seated on the C-shaped member 66. Thus the first and second frames provide mutual support allowing the seat 40 to carry the load of a child or baby seated thereon. An opening 72 is provided in the rear end gate through which the legs of a child seated on the seat 40 may protrude.

When trolley 10 is not in use, it can be stored in a nested arrangement with similar such trolleys. As will be appreciated from the description which follows, the seat 40 can be automatically moved from the child or baby receiving position to the collapsed position on insertion of the trolley 10 into the rear end of a similar such trolley. In the description which follows, the parts of the second trolley will receive the additional designation "-1".

In more detail, when the trolley 10 is inserted into the rear end of the trolley 10-1 it pushes the rear end gate 14-1 of that trolley inwardly of the goods receiving basket 12-1 of that trolley so that the leading end of the basket 12 can pass between the side members 16-1 of the trolley 10-1. Eventually, the trolley 10 reaches a position at which the push-handle 28-1 of the trolley 10-1 engages the first frame 50 of the seat 40. As insertion of the trolley 10 continues the pushing force exerted by the push-handle 28-1 as a result of the relative movement between the trolleys causes the first frame 50 to be pushed towards the rear end gate 14 of the trolley 10. As the frame 50 pivots towards the rear end gate 14, the C-shaped member 66 moves downwardly allowing the second frame 52 seated thereon to pivot downwardly and towards the rear end gate 14. In the fully nested position of the trolleys 10, 10-1 the back support portion 42, bottom support portion 44, frame 50 and frame 52 are disposed in substantially the same plane which plane is substantially parallel to the plane of the rear end gate 14 as shown in Figures 2. With the seat in the collapsed position shown in Figure 2 a further trolley 10-2 can be nested with the trolley 10 by inserting the leading end of its basket 12-2 into the rear end gate 14 of the trolley 10. As the basket 12-2 is pushed into the rear end gate 14, the end gate pivots upwardly and towards the leading end of the trolley 10 carrying the collapsed seat with it.

If it is desired to nest the trolley 10 with a trolley 10-1 which has a seat 40-1 not in the collapsed position shown in Figure 2, the procedure is the same as that described above. However in this case, when the basket 12 pushes the end gate 14-1 inwardly of the basket 12-1 it also automatically collapses the seat 40-1. This is achieved when the end gate 14-1 is pivoted to a position in which the first frame pivots towards the end gate 14 under the influence of gravity. Once the frame 50 begins to pivot in this way, the C-shaped member 66 ceases to provide support for the second frame 52 which will likewise pivot toward the end gate 14 under the influence of gravity.

It will therefore be appreciated that the seat 40 is automatically collapsible during nesting of a trolley 10 with a similar such trolley either on insertion of the trolley into the rear end of another such trolley or on insertion of another trolley into its rear end.

Additionally, it will be appreciated that the construction of the seat can provide a more comfortable seat for a child or baby than the conventional prior art seat and which is collapsible for nesting purposes.

Although the embodiment shows the provision of only one child or baby seat 40, a plurality of seats may be provided using a single frame means. It will be appreciated that by suitable dimensioning of the first and second frames; back support means and bottom support means which define two child or baby receiving portions can readily be carried. The skilled person will understand that, for example, an integral plastics moulding defining two bottom support portions can readily be provided.

## Claims

1. A shopping trolley (10) having seat means for at least one child or baby, said seat means comprising frame means (50, 52) mounted to a rear end gate (14) of the trolley and back support means (42) and bottom support means (44) carried by said frame means, the arrangement being such that when, in use, the trolley is moved into a nested position with a similar such trolley, said seat means can move from a child or baby receiving position to a collapsed position in which said frame means, back support means and bottom support means are disposed adjacent said rear end gate of the trolley.

2. A trolley as claimed in claim 1, wherein in said collapsed position said frame means, back support means and base support means are disposed in substantially the same plane.

3. A trolley as claimed in claim 2, wherein said plane is substantially parallel to the plane of said rear end gate.

4. A trolley as claimed in claim 1, 2 or 3, wherein said frame means comprises a first frame (50) carrying said back support means (42) and a second frame (52) carrying said bottom support means (44), said frames being pivotably connected to said rear end gate at spaced apart locations thereon.

5. A trolley as claimed in claim 4, wherein said second frame and bottom support means are adapted to pass inwardly of said first frame during movement between said collapsed position and said child or baby receiving position.

6. A trolley as claimed in claim 4 or 5, wherein said first frame is pivotably connected to said end gate at a location disposed generally below the location at which said second frame is pivotably connected to said end gate.

7. A trolley as claimed in claims 4, 5 or 6, wherein said first frame comprises means (66) for supporting said second frame when in said child or baby receiving position.

8. A trolley as claimed in claim 7, wherein said supporting means defines a seat for said second frame.

9. A trolley as claimed in any one of claims 4 to 8, wherein said second frame is adapted to limit pivotal movement of said first frame away from a rear end of the trolley.

10. A trolley as claimed in any one of the preceding claims, wherein said bottom support portion and/or said back support portion consists of a plastics moulding.

11. A trolley as claimed in any one of the preceding claims, wherein said back support means and bottom support means define a plurality of seats for a child or baby.

12. A trolley as claimed in any one of claims 1 to 10, wherein said bottom support means has a generally U-shaped transverse cross-section.

13. A trolley as claimed in any one of claims 1 to 10, wherein said back support means has a generally U-shaped transverse cross-section.

14. A trolley as claimed in any one of the preceding claims, wherein said frame means comprises stop means (70) engageable with said rear end gate for defining said collapsed position.

15. A shopping trolley (10) having a goods receiving receptacle (12) which is provided with a gate (14) at a rear end thereof and seating for at least one child or baby, said seating comprising:
frame means (50, 52) mounted to said gate (14);
bottom support means (44) defining at least one recess for receiving the bottom of a child or baby; and
back support means (42) for supporting the back of a child or baby seated in said bottom support means (44);
said bottom support means and back support means being carried by said frame means and, to permit the trolley to receive a similar such trolley in a nested condition, said seating being adapted to be moveable from a child or baby receiving condition to a collapsed condition in which said frame means, bottom support means and back support means are disposed adjacent said end gate.

16. A shopping trolley (10) having a goods receiving receptacle (12) which has a rear end gate (14) and seating for at least one child or baby, said seating comprising:
a first frame (50) comprising at least one rod-like member and pivotably mounted to said rear end gate;
a second frame (52) comprising at least one rod-like member (58, 62) and pivotably mounted to said rear end gate;
a contoured back support (42) fixed to said first frame; and
a contoured bottom support fixed to said second frame;
said back support and bottom support defining at least one seat for a child or baby and said first frame and second frame being arranged such that, in use, said seating can be collapsed to a position adjacent said rear end gate to permit nesting of the trolley with similar such trolleys.
